# EUROPÄISCHE PATENTSCHRIFT

(11) **EP 1 103 492 B1**
(45) Veröffentlichungstag und Bekanntmachung des Hinweises auf die Patenterteilung: **09.02.2005**
(21) Anmeldenummer: 00125628.8
(22) Anmeldetag: 23.11.2000
(51) Int. Cl.: B65D 90/62, F16K 1/24, B01F 15/00

(54) **Vorrichtung und Verfahren zum Verschliessen einer Entleeröffnung in einem drehenden Behälter**
Device and method for closing a discharging opening in a rotating container
Dispositif et procédé de fermeture d'un orifice de déchargement d'un récipient rotatif

(30) Priorität: 26.11.1999 DE 19956939
(43) Veröffentlichungstag der Anmeldung: 30.05.2001
(73) Patentinhaber: Maschinenfabrik Gustav Eirich GmbH & Co KG, D-74736 Hardheim (DE)
(72) Erfinder: Adelmann, Dieter, 97900 Külsheim (DE); Eirich, Paul, 74736 Hardheim (DE)
(74) Vertreter: Weber, Dieter, Dr. Dipl.-Chem.

(56) Entgegenhaltungen:
- DE-A- 2 903 951
- DE-A- 2 918 348
- DE-U- 8 816 428
- FR-A- 2 535 432
- US-A- 3 727 880
- PATENT ABSTRACTS OF JAPAN vol. 007, no. 110 (M-214), 13. Mai 1983 (1983-05-13) & JP 58 031824 A (MITSUBISHI JUKOGYO KK), 24. Februar 1983 (1983-02-24)

## Beschreibung

Die Erfindung betrifft eine Vorrichtung und ein Verfahren zum Verschließen einer im Boden eines Behälters, vorzugsweise eines Drehbehälters einer Aufbereitungsmaschine, angeordnete Entleeröffnung mit einem an einer Schwenkwelle über einem Tragarm angeordneten Verschlußdekkel.

Solche Verschließvorrichtungen sind, insbesondere für Mischmaschinen mit drehenden Teller grundsätzlich bekannt. Dabei ist jedoch im allgemeinen der Verschlußdeckel stets mit dem Tragarm und der Schwenkwelle starr verbunden. In einer solchen Anordnung führt dann der Verschlußdeckel zwangsläufig eine Kreisbewegung um die Schwenkwelle aus. Bei dieser Konstruktion ist es nachteilig, daß ein Einfahren des Verschlußdeckels in die Entleerungsöffnung des Behälterbodens nur dann möglich ist, wenn zwischen dem Außendurchmesser des Verschlußdeckels und dem Innendurchmesser der Entleerungsöffnung ein erhebliches Spiel besteht, so daß die horizontale Bewegungskomponente der Kreisbewegung in dem durch die Durchmesserdifferenz entstehenden Spalt abgefangen werden kann. Durch den Spalt treten bei dieser Ausführung jedoch mit Nachteil erhebliche Undichtigkeiten auf, so daß in einem derart verschlossenen Behälter keine flüssigen oder feinkörnigen Stoffe behandelt werden können.

Es wurde daher mit einem in der DE 29 03 951 beschriebenen Gegenstand versucht, dieser Schwierigkeit dadurch entgegenzuwirken, daß die Verschließvorrichtung mit einer elastischen Lagerung versehen wird. Als elastisches Glied werden dort Gummi- oder Kunststoffteile beschrieben. Dabei ist das elastische Element zentrisch unter der Mitte des Verschlußdeckels angeordnet und wird mindestens von zwei Seiten von einer lagergabel eingeschlossen. Die Wirkrichtung bzw. die Wirkachse des elastischen Elements steht daher zum einen senkrecht zu dem Verschlußdeckel und zum anderen verläuft sie direkt durch den Mittelpunkt des Verschlußdekkels. Durch diese Konstruktion ist es möglich, den Verschlußdeckel begrenzt gegenüber dem Tragarm zu kippen. In der DE 29 03 951 wird in vorteilhafter Weise der erste Teil der Schließbewegung nach wie vor mittels einer normalen Kreisbewegung ausgeführt, bei welcher sich der Tragarm durch die angetriebene Schwenkwelle auf einem Kreisbogen bewegt. Sobald aber der Verschlußdeckel die Entleerungsöffnung am Boden des Behälters erreicht und dort anstößt, tritt das Rückstellelement in Aktion und erlaubt eine begrenzte Ablenkung des Verschlußdeckels von der Kreisbewegung, so daß dieser sich der Entleerungsöffnung anpaßt, während der den Deckel haltende Tragarm die Kreisbewegung zuende führt. Das Rückstellelement ist somit in der Lage, den Unterschied der Bewegungsrichtung zwischen Innenkante der Entleerungsöffnung einerseits und der Außenkante des Verschlußdeckels andererseits auszugleichen.

Diese Lösung hat sich für einfache Anwendungen bewährt, sie ist jedoch nicht geeignet für die Anwendung an hochdichten Behältern, wie z.B. Vakuum- oder Druckbehältern. Zudem ist das Rückstellelement schwierig einzustellen und bedarf häufiger Nachjustierungen.

Bei vielen Anwendungen werden die Böden von Aufbereitungsmaschinen durch besonders verschleißfeste Auskleidungen geschützt. Dabei kann es sich z.B. um Verbundstahl, Keramik oder Basaltfliesen handeln. Alle diese Auskleidungen sind jedoch relativ dick, so daß zwangsläufig darin angeordnete Entleerungsöffnungen an Tiefe zunehmen. Um solche tiefen Entleeröffnungen zu schließen, ist eine sehr große Abweichung der Deckelbewegung von der kreisförmigen Bewegung des Tragarms nötig. Der Deckel muß hingegen nahezu linear in die Entleeröffnung eingefahren werden. Die bekannten Verschließvorrichtungen sind im allgemeinen nur unzureichend in der Lage, solche tiefen Entleeröffnungen hinreichend dicht zu schließen.

Der vorliegenden Erfindung liegt daher die Aufgabe zugrunde, eine Verschließvorrichtung bereitzustellen, mit welcher trotz einfachem Aufbau und günstiger Einbaubedingungen ein zuverlässiger Verschluß mit guter Dichtigkeit gegeben ist, die lange Wartungsintervalle erlaubt und auch im Dauerbetrieb Druck- oder Vakuumdichtigkeit gewährleistet

Diese Aufgabe wird durch die Vorrichtung gemäß dem Anspruch 1 und das Verfahren gemäß dem Anspruch 17 gelöst.

Die Einrichtung zur Regelung bzw. Steuerung der Stellung des Verschlußdeckels in Bezug auf die Entleeröffnung ist so vorgesehen, daß die Hubbewegung des Deckels bei Eintritt in die Entleeröffnung im wesentlichen linear, d.h. translatorisch, und im wesentlichen parallel zur Mittelachse des Verschlußdeckels erfolgen kann.

Dies bedeutet, daß der Deckel vor oder zu Beginn des Eintauchens in die Entleeröffnung des Behälters, gegebenenfalls auch durch Eingriff mit dem Öffnungsrand, in eine im wesentlichen parallele Ausrichtung zur Ebene dieses Öffnungsrandes verkippt und in dieser Ausrichtung in seine endgültige Schließposition bewegt wird. Die Regelung bzw. Steuerung der Deckelverkippung kann also sowohl aktiv als auch passiv erfolgen.

Eine Möglichkeit eine solche Regelung bzw. Steuerung zu verwirklichen besteht darin, daß der Verschlußdeckel über ein Rückstellelement mit dem Tragarm verbunden wird, so daß der Verschlußdeckel gegenüber dem Tragarm um zumindest eine Kippachse kippbar ist. Dabei ist die Kippachse zweckmäßig parallel zur Schwenkwelle angeordnet. Dieses Rückstellelement erlaubt eine definierte Kippbewegung des Verschlußdeckels gegenüber dem Tragarm um die Kippachse. Dabei kann die Kippbewegung sowohl durch eine aktive Steuerung, z.B. durch eine Antriebseinrichtung, als auch durch eine passive Steuerung, z. B. durch in Eingriff treten des Verschlußdeckels mit dem Innenrand der Entleeröffnung, verursacht werden. Dabei ist das Rückstellelement derart angeordnet, daß die Symmetrie- bzw. Wirkachse seiner im wesentlichen zylindrischen Elemente außerhalb der Ebene liegt, die von der Kippachse und einer Verbindungslinie zwischen Kippachse und dem Mittelpunkt des Verschlußdeckels aufgespannt wird.

Die Wirkachse könnte beispielsweise parallel zu der erwähnten Ebene verlaufen. Erfindungsgemäß ist jedoch eine Anordnung vorgesehen, bei der die Wirkachse mit der erwähnten Ebene einen Winkel von mindestens 10°, vorzugsweise mindestens 20° besonders bevorzugt etwa 30° einschließt. Je nach Anwendungsfall kann aber auch eine noch größerer Winkel zwischen Wirkachse und der erwähnten Ebene vorteilhaft sein. Das Rückstellelement ist in einer alternativen Ausführungsform so angeordnet, daß eine Verbindungslinie zwischen den effektiven Angriffspunkten des Rückstellelements zu einer hierzu nächstliegenden, parallelen und durch die Kippachse verlaufenden Geraden einen deutlichen Abstand hat, der vorzugsweise mehr als 10% des Deckelradius beträgt. Wenn die Kippachse also die Achse des Verschlußdeckels schneidet, so ist das Rückstellelement vorzugsweise asymmetrisch zu der Achse des Verschlußdeckels angeordnet. Dadurch ist es möglich, den Verschlußdeckel viel weiter gegenüber dem Tragarm um die Kippachse zu verkippen. Der Elongations- bzw. Federweg des Rückstellelements wird um so größer, je weiter das Rückstellelement von der Achse des Verschlußdeckels beabstandet angeordnet ist.

Insbesondere für größere Elongationen des, vorzugsweise elastischen, Rückstellelements und/oder bei größeren auf das Rückstellelement wirkenden Kräften ist es zweckmäßig, das Rückstellelement aus einer oder mehreren Federn zu fertigen. Mit Vorteil kommen Druckfedern oder Kombinationen von Druck- und Zugfedern zur Anwendung.

Alternativ dazu kann das Rückstellelement auch ein pneumatischer oder hydraulischer Zylinder sein. Zudem ist eine Ausführungsform besonders bevorzugt, bei der die Rückstellkraft des Rückstellelements einstellbar ist. So kann die Verschließvorrichtung an die Gegebenheiten der Entleerungsöffnung, wie z.B. die Tiefe der Entleerungsöffnung, oder an die bestehenden Gegenkräfte leicht angepaßt werden. Die Veränderung in der Tiefe der Entleerungsöffnung oder alterungsbedingte Veränderung des elastischen Gliedes können durch Nachstellen der Rückstellkraft des elastischen Gliedes ausgeglichen werden.

Für den Fall, daß das Rückstellelement aus einer oder aus mehreren Federn besteht, kann eine Spannschraube vorgesehen werden, die die Vorspannung der Federn regelt. Im Falle von pneumatischen oder hydraulischen Arbeitszylindern wird der Zylinder mit einer Druckquelle und einer Druckregelung verbunden. Dadurch kann der Druck in einem Druckspeicher variiert und damit die Rückstellkraft des Rückstellelements eingestellt werden.

Um die Kräfteverhältnisse während des Schließvorgangs gleichmäßiger zu verteilen, kann es vorteilhaft sein, wenn der Drehpunkt der Kippachse nicht auf der Mittelachse de Verschlußdekkels liegt.

Eine besonders vorteilhafte Ausführungsform der vorliegenden Erfindung sieht eine Einrichtung zur Erfassung des Kippwinkels zwischen Tragarm und Verschlußdeckel vor. Dies kann beispielsweise durch eine Wegmessung und/oder eine Endlagensignalisierung durchgeführt werden.

Eine solche Erfassung ist auch ohne eine Einrichtung zur Steuerung bzw. Regelung der Lage des Deckels in Bezug auf die Entleeröffnung möglich. Dadurch ist es unter anderem möglich, zu bestimmen, ob der Verschlußdeckel nach Beendigung des Verschließvorgangs richtig auf der Entleeröffnung aufsitzt oder nicht. Zudem kann bei Beendigung des Verschließvorgangs ein Signal an andere Einrichtungen gegeben werden, die dann beispielsweise für die erneute Befüllung des Drehbehälters sorgen. Dieses Signal kann zudem in einem System zur Betriebsdatenerfassung (BDE) gespeichert werden.

Die Dichtigkeit der Verschließvorrichtung kann noch weiter erhöht werden, wenn der Verschlußdeckel einen Dichtring aufweist, der aufblas- bzw. aufpumpbar ist. Eventuell vorhandene Verunreinigungen an der Innenseite der Entleerungsöffnung und/oder der Außenseite des Verschlußdeckels sowie alterungsbedingte Veränderungen können durch den aufblas- bzw. aufpumpbaren Dichtring ausgeglichen werden. Zudem ist es möglich, zwischen Verschlußdeckel und Entleerungsöffnung ein größeres Spiel vorzusehen. Nachdem der Verschlußdeckel in die Entleerungsöffnung eingekippt bzw. eingefahren ist, wird der Dichtring aufgeblasen bzw. aufgepumpt und gewährleistet auf diese Art eine hohe Dichtigkeit.

Bevorzugt ist eine Ausführungsform, die einen Drehwächter zur Erfassung der Rotationsgeschwindigkeit und/oder der Rotationsbeschleunigung des Verschlußdeckels vorsieht. Zudem weist der Verschlußdeckel vorzugsweise einen Drehantrieb auf. So ist es beispielsweise möglich, während des Verschließvorgangs die Rotationsgeschwindigkeit des Verschlußdeckels zu regeln. Sie kann dann an die Rotationsgeschwindigkeit des Behälters bzw. der Entleerungsöffnung angepaßt werden. Dadurch wird die Reibung während des Verschließvorgangs zwischen Verschlußdeckel und Entleerungsöffnung minimiert und die Lebensdauer des Dichtrings erhöht.

Mit Vorteil wird die Umwandlung der ursprünglich kreisförmigen Schwenkbewegung des Verschlußdeckels in eine im wesentlichen lineare Bewegung, d. h. die Steuerung der Stellung des Deckels in Bezug auf die Entleeröffnung, während des Einfahrens des Verschlußdeckels in die Entleerungsöffnung weiter dadurch verbessert, daß die Schwenkwelle des Tragarms verschiebbar ist.

Diese Verschiebbarkeit wird vorzugsweise durch eine verstellbare exzentrische Lagerung der Schwenkwelle gewährleisten. Durch die Verstellung der exzentrischen Lagerung kann dann die Schwenkwelle und damit der Drehpunkt des Tragarms angepaßt werden. Vorzugsweise erfolgt die Verstellung der exzentrischen Lagerung der Schwenkwelle automatisch mit dem Verschwenken des Tragarms, wobei eine Antriebsvorrichtung hierfür vorgesehen ist.

Selbstverständlich kann auch völlig auf das Rückstellelement verzichtet werden. Die erwähnte Verschiebbarkeit der Schwenkwelle ist eine alternative Möglichkeit, die Stellung des Verschlußdeckels zu steuern.

Die beschriebene Verschließvorrichtung erfordert zwangsläufig in gewissen Abständen Revisions- und Wartungsarbeiten. Üblicherweise werden diese nach einem fest vorgegebenen Zeitintervall durchgeführt. Eine vorteilhafte Ausgestaltung der vorliegenden Erfindung sieht vor, daß eine optische Überwachungseinrichtung vorgesehen ist, die vorzugsweise auf einem Verlängerungsarm des Lagergehäuses des Verschlußdeckels angebracht ist. Die optische Überwachungseinrichtung, die z.B. eine Kamera oder eine Linse eines Endoskops sein kann, kann durch die hier verwirklichte, erweiterte Beweglichkeit des Verschlußdeckels in geeigneter Weise auf den Verschlußdeckel montiert werden, so daß mit der Beweglichkeit des Verschlußdeckels auch der Blickwinkel der optischen Überwachungseinrichtung vergrößert wird. Dadurch kann im Vorfeld von notwendigen Reinigungs- und Wartungsarbeiten bereits bestimmt werden, ob und inwieweit diese notwendig sind.

Die Wartungsintervalle können durch eine Reinigungsvorrichtung zur Reinigung der Innenseite der Entleeröffnung und/oder der Außenseite des Verschlußdeckels weiter erhöht werden.

Hinsichtlich des Verfahrens wird die eingangs erwähnte Aufgabe dadurch gelöst, daß die Stellung des Verschlußdeckels in Bezug auf die Entleeröffnung geregelt bzw. gesteuert wird, so daß die Hubbewegung des Deckels bei Eintritt in die Entleeröffnung im wesentlichen translatorisch ohne Drehung und vorzugsweise linear und parallel zur Mittelachse des Verschlußdeckels erfolgt.

Wie bereits erwähnt, kann die Bewegungssteuerung des Deckels, d. h. die Änderung seines Kippwinkels zum Tragarm, auch passiv zum Beispiel dadurch erfolgen, daß der Deckel mit dem Rand der Entleeröffnung in Kontakt tritt.

Dadurch, daß die Stellung des Verschlußdeckels in Bezug auf die Entleeröffnung bzw. Kippwinkel zwischen Verschlußdeckel und Tragarm eingestellt wird, kann ein präzises Einfahren des Verschlußdeckels in die Entleeröffnung gewährleistet werden. Dies ermöglicht ein kleineres Spiel und führt zu einer erhöhten Dichtigkeit des Verschlusses. Wesentlich ist, daß durch diese Regelung die Kreisbewegung des Tragarms und damit auch des Verschlußdeckels zu einer mehr linearen oder translatorischen (d. h. ohne weitere Eigenrotation um die Kippachse) parallel zur Mittelachse verlaufenden Bewegung modifiziert wird.

Diese Regelung erfolgt entweder über die Veränderung des Kippwinkels zwischen Tragarm und Verschlußdeckel und/oder über die Verstellung der Schwenkwelle vor bzw. während des Eintauchens des Deckels in die Entleeröffnung. Die Regelung des Kippwinkels zwischen Tragarm und Verschlußdeckel führt im allgemeinen zu besseren Ergebnissen. Bei besonders aggressiven oder gefährlichen Materialien besteht der Wunsch, möglichst wenige Maschinenelemente im vom Material beaufschlagten Bereich zu haben, bzw. die Notwendigkeit des Zugangs durch Personen soweit als möglich zu minimieren. Für diesen speziellen Fall wird die Steuerung der Bewegungskurve des Verschlußdeckels mit Vorteil durch eine Lageveränderung des Drehpunktes der Schwenkwelle vorgenommen. Dies kann durch eine Linearverschiebung des Wellenlagers oder durch Anordnung des Lagers in einem drehbaren Exzenter, der mit einem Drehantrieb verbunden ist, erreicht werden.

Zur Erhöhung der Dichtigkeit sieht ein besonders bevorzugtes Verfahren vor, daß in einer Schließposition des Verschlußdeckels ein den Verschlußdeckel oder die Entleeröffnung umgebender aufblas- bzw. aufpumpbarer Dichtring expandiert wird. Erfindungsgemäß wird also zunächst der Verschlußdeckel in die Einfüllöffnung eingefahren und anschließend der Dichtring aufgeblasen bzw. aufgepumpt. Somit ist eine extrem hohe Dichtigkeit des Verschlußdeckels gewährleistet.

Ein besonders zweckmäßiges Verfahren sieht vor, daß der Kippwinkel und/oder die Lage der Schwenkwelle erfaßt werden und die Regelung der Verschlußdeckelstellung in Abhängigkeit von den erfaßten Werten erfolgt. Dadurch ist gewährleistet, daß eventuell im Laufe der Zeit auftretende Veränderungen, die beispielsweise alterungsbedingt sein können, durch die Regelung der Verschlußdeckelstellung in Abhängigkeit von dem erfaßten Kippwinkel und/oder der erfaßten Lage der Schwenkwelle angepaßt werden können.

Für die Haltbarkeit des Dichtringes ist es von Vorteil, wenn der Verschlußdeckel bereits während des Schließvorgangs in eine Drehbewegung versetzt wird, so daß die Rotationsgeschwindigkeit des Verschlußdeckels in etwa mit der Rotationsgeschwindigkeit des Behälters übereinstimmt. Der Verschlußdeckel ist im allgemeinen fliegend gelagert, so daß während des Verschließvorgangs der Verschlußdeckel gegen den sich drehenden Drehbehälter gedrückt wird. Sobald der Verschlußdeckel die Entleerungsöffnung berührt, kommt es zu einer Beschleunigung des Verschlußdeckels aufgrund der Reibung zwischen Dichtring und Entleerungsöffnung. Dadurch entsteht zwischen Erstkontakt zwischen Entleeröffnung und Verschlußdeckel bis zur völligen Mitnahme ein Schlupf, der auf Dauer zu Verschleiß am Dichtring führt. Durch die Anpassung der Rotationsgeschwindigkeit des Verschlußdeckels an die Rotationsgeschwindigkeit des Behälters kann der Verschleiß des Dichtrings stark eingeschränkt oder sogar verhindert werden.

Ein besonders zweckmäßiges Verfahren sieht vor, daß eine Reinigungseinrichtung für die Reinigung der Entleeröffnung in Abhängigkeit von der Lage des Tragarms gesteuert wird. Dadurch kann bei Bedarf die Reinigungseinrichtung automatisch, während der Behälter geöffnet ist, die Innenseite der Entleeröffnung reinigen. Bei Schließen des Verschlußdeckels wird die Reinigungseinrichtung automatisch von der Innenkante der Entleeröffnung entfernt.

Ein besonders zweckmäßiges Verfahren sieht einen Prüfmodus zur Prüfung des Zustandes des Dichtringes vor, der die Schritte aufweist: Rotieren des Drehbehälters, Verschließen des Drehbehälters mit dem nicht angetriebenen Verschlußdeckel, Erfassen der Rotationsgeschwindigkeit des Verschlußdeckels in Abhängigkeit von der Lage des Deckels während des Verschließens des Drehbehälters und Ermittlung des Betriebszustandes des Dichtrings in Abhängigkeit von der erfaßten Rotationsgeschwindigkeit.

Wie bereits erwähnt, wird der fliegend gelagerte Verschlußdeckel bei Kontakt mit der Entleerungsöffnung durch die Reibung beschleunigt. Durch das beschriebene Verfahren kann aus der Beschleunigung des Verschlußdeckels auf den Betriebszustand des Dichtrings geschlossen werden. Mit zunehmendem Verschleiß des Dichtrings entsteht eine langsamere Beschleunigung bzw. ein größerer Schlupf. Der Dichtring muß daher nicht nach einem vorgegebenen Intervall ausgetauscht werden, sondern kann bis zu einem durch den Schlupf unmittelbar erfaßbaren Verschleißzustand in der Verschließvorrichtung verbleiben.

Alternativ kann die Stellung des Verschlußdeckels auch optisch erfaßt werden und die Stellung des Verschlußdeckels in Abhängigkeit von der optischen Erfassung geregelt werden.

Eine vorteilhafte Ausgestaltung des erfindungsgemäßen Verfahrens sieht vor, daß eine optische Bilderfassungseinrichtung, die auf der beweglichen Verschließvorrichtung montiert ist, zur Überwachung der die Verschlußvorrichtung umgebenden Maschinenteile verwendet wird.

Dadurch, daß der Verschlußdeckel in der geöffneten Stellung in bzw. an eine Renigungseinrichtung gedrückt wird, kann das Wartungs- bzw. Reinigungsintervall weiter erhöht werden.

Weitere Vorteile, Merkmale und Anwendungsmöglichkeiten der vorliegenden Erfindung werden deutlich anhand der folgenden Beschreibung einer bevorzugten Ausführungsform und der dazugehörigen Figuren. Es zeigen:

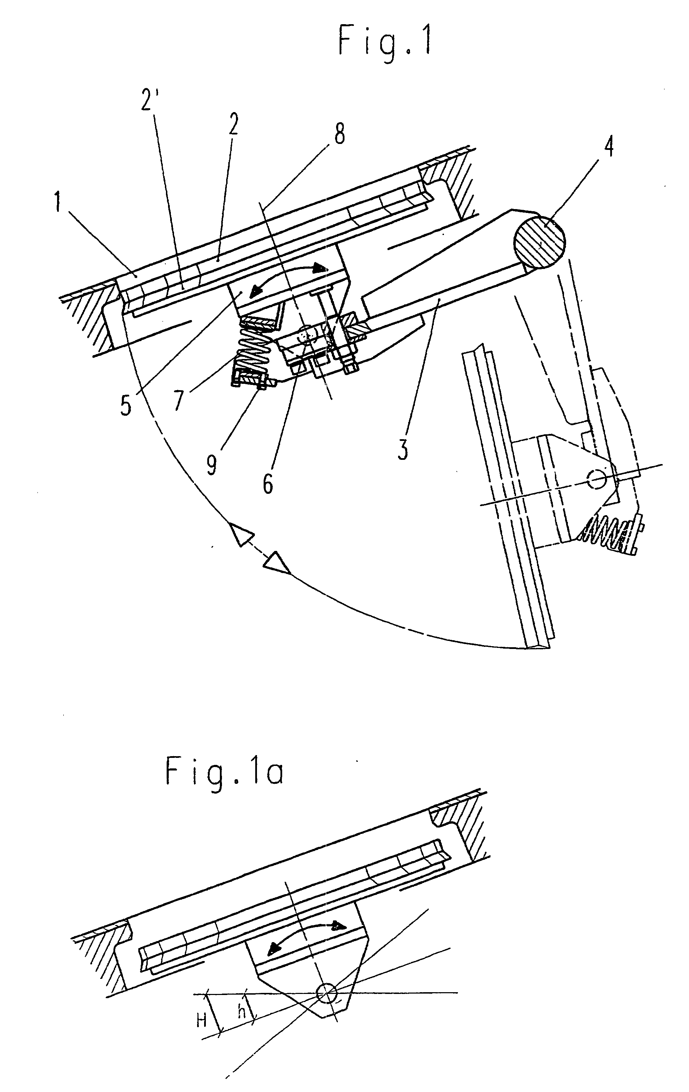

- Figur 1: eine erfindungsgemäße Verschließvorrichtung in geschlossener und in geöffneter Position,
- Figur 1 a: den Federweg des Verschlußdeckels in Abhängigkeit von dem Abstand des elastischen Gliedes von der Mittelachse,
- Figur 2: eine mögliche Verwirklichung des elastischen Gliedes mit Federn,
- Figur 3: einen Verschlußdeckel mit einem hydraulischen Zylinder als elastisches Glied,
- Figur 4 und 4a: einen Verschlußdeckel mit einer Kippachse, die nicht auf der Mittelachse liegt,
- Figur 5: einen Verschlußdeckel mit aufblasbarem Dichtring und einer Vorrichtung zur Messung des Kippwinkels bzw. der Elongation des Rückstellelements,
- Figur 6: einen Verschlußdeckel mit Drehantrieb,
- Figur 7: eine Verschlußvorrichtung mit verschiebbarer Schwenkwelle,
- Figur 7a: eine Verschließvorrichtung mit exzentrisch gelagerter Schwenkwelle,

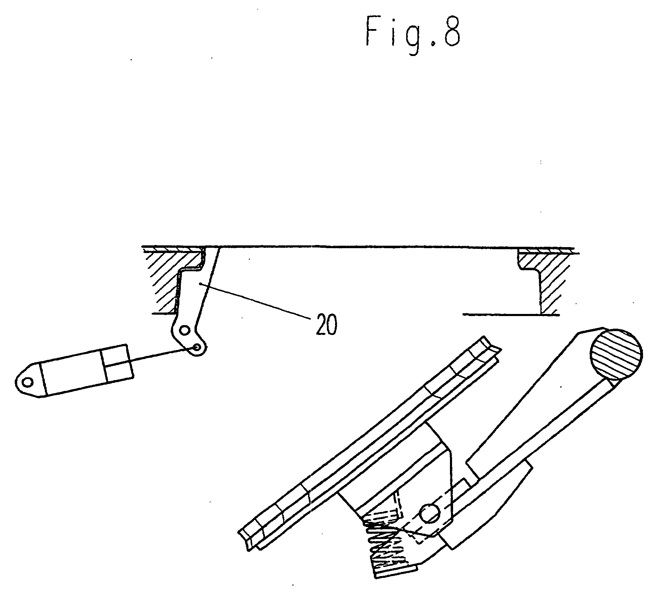

- Figur 8: eine Verschließvorrichtung mit Reinigungsvorrichtung für die Entleeröffnung,
- Figur 9: eine Verdeutlichung der Federwege an einem Verschlußdeckel,
- Figur 10: eine Verschließvorrichtung mit einer Reinigungseinrichtung für den Verschlußdeckel.

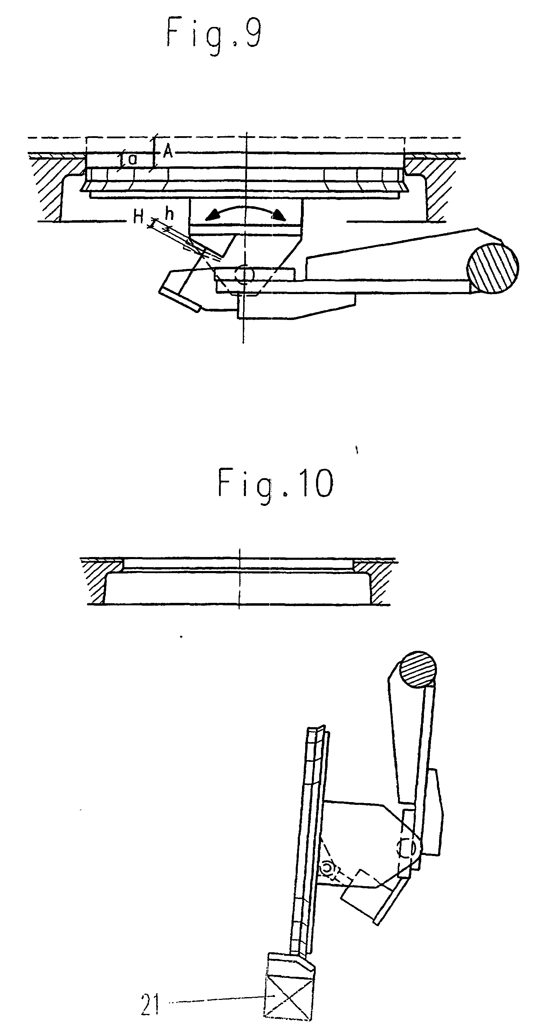

Figur 1 zeigt eine sehr einfache Ausgestaltung der Erfindung. Der Verschlußdeckel 2 ist in der Eintrittsposition in der Entleeröffnung 1 dargestellt. Eine Halteplatte des Deckels 5 ist über die Lagergabel und den Lagerzapfen 6 mit dem Tragarm 3 verbunden und somit um die Kippachse des Lagerzapfens schwenkbar. Der Tragarm 3 ist über die Schwenkwelle 4 drehbar gelagert. Das Rückstellelement 7 liegt außerhalb der Verbindungslinie zwischen Kippachse 6 und Mittelpunkt des Verschlußdeckels 2, d.h. die Wirkachse des Rückstellelements liegt nicht auf der Ebene, die von der Kippachse 6 und einer Verbindungslinie 8 zwischen Kippachse und Mittelpunkt des Verschlußdeckels aufgespannt wird. Je größer der Winkel zwischen Wirkachse und dieser Ebene, d. h. je weiter das Rückstellelement 7 an seinem einem Angriffspunkt von der Mittelachse 8 entfernt ist, um so größer wird der Federweg des elastischen Gliedes. Figur 1a zeigt schematisch den Zusammenhang zwischen dem Abstand des einen Angriffspunkt des elastischen Gliedes von der Mittelachse und dem Federweg h bzw. H. In Figur 9 ist schematisch der Einfluß einer größeren Tiefe der Entleeröffnung auf die erforderliche seitliche Ablenkung des Verschlußdeckels und damit auf den Federweg gezeigt.

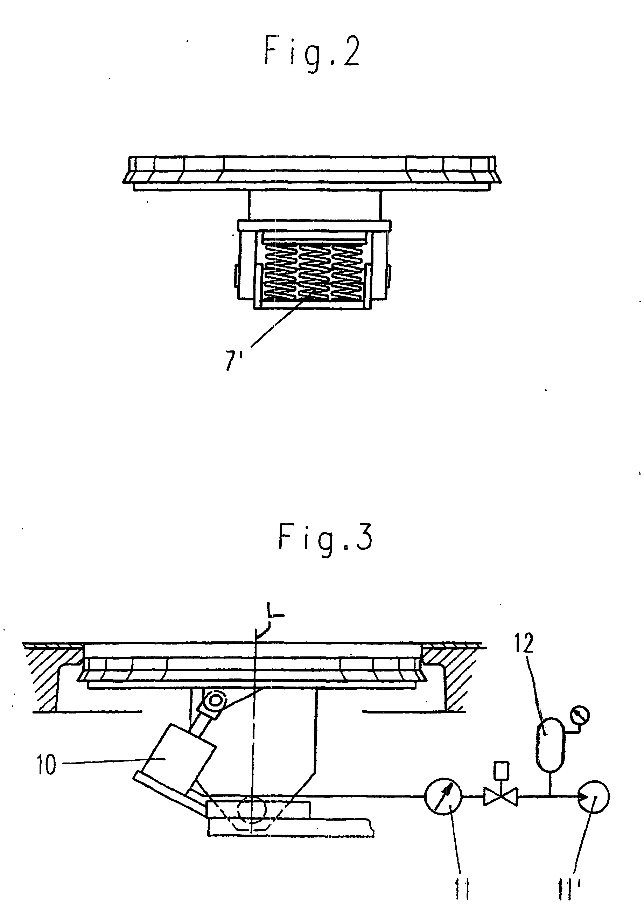

Je nach den vorhandenen Einbauverhältnissen und den erforderlichen Betätigungskräften kann das Rückstellelement beispielsweise aus einer oder aus mehreren Federn bestehen (siehe z.B. Figur 2). Da während des Bewegungsablaufs der Verschließvorrichtung unterschiedliche Momente von dem Verschlußdeckel aufzunehmen sind, können je nach Aufgabe mehrere Federn mit unterschiedlichen Kennlinien oder Wirkrichtungen (Druck oder Zug) kombiniert werden. Federn können beispielsweise auch konzentrisch ineinander angeordnet werden.

Die Vorspannung der Federn kann über die Spannschrauben 9 eingestellt werden.

Alternativ dazu kann das elastische Element, wie in Figur 3 gezeigt, auch ein pneumatischer oder hydraulischer Arbeitszylinder 10 sein. Die erforderliche Elastizität des Zylinders wird durch den Druckspeicher 12 sichergestellt. Im Falle von betätigten bzw. regelbaren Zylindern sind diese auch mit einer Druckquelle 11' und einer Druckregelung 11 verbunden.

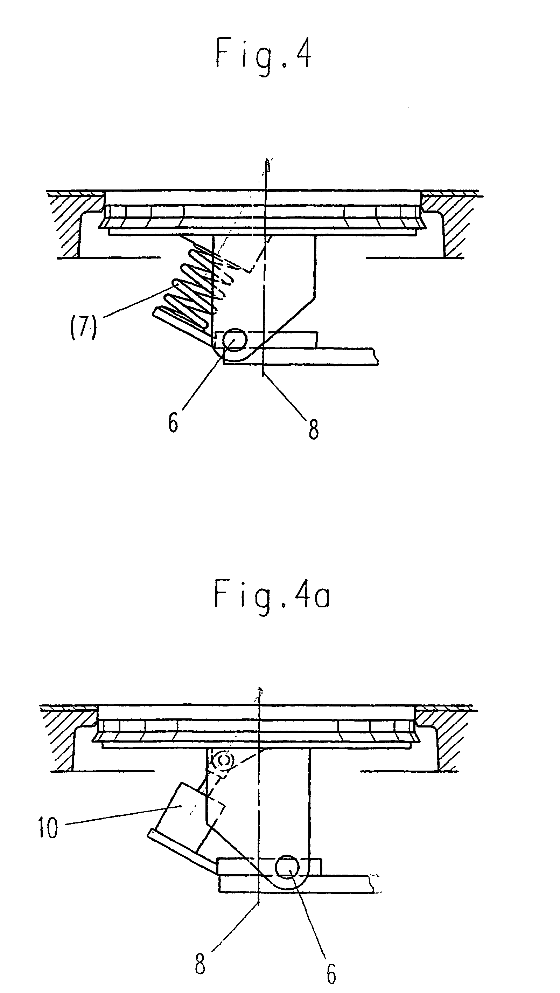

Eine weitere anwendungsabhängige Anpassungsmöglichkeit der Kraftverteilung bzw. der Momentenaufnahme während des Schließ- oder Öffnungsvorgangs kann auch dadurch erreicht werden, daß die Anordnung der Gelenkachse 6 außerhalb der Mittelachse 8 des Deckels folgt, wie in den Figuren 4 und 4a beispielhaft unter Verwendung von Federn 7 bzw. eines Zylinders 10 gezeigt.

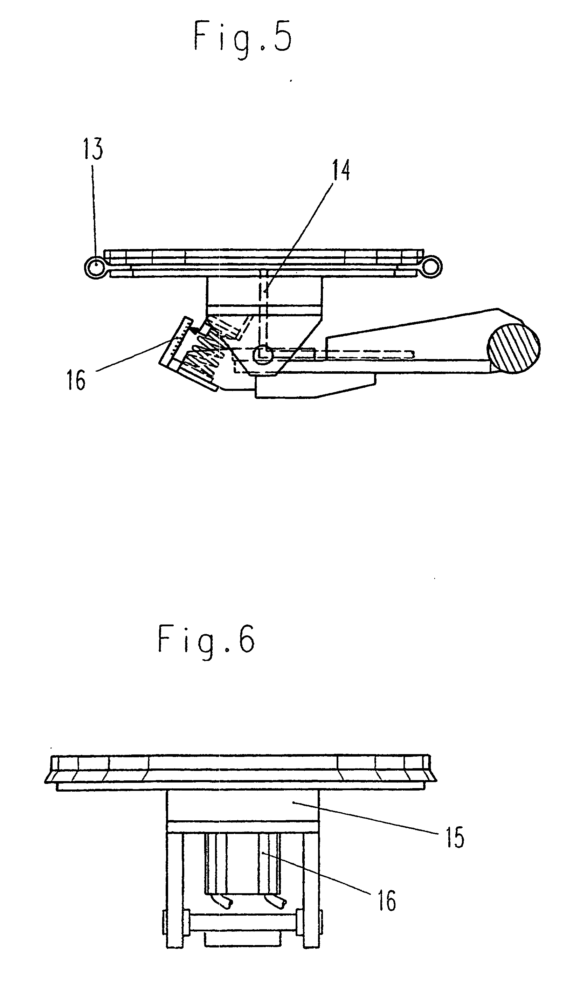

Sowohl bei der Verwendung von Federn als auch eines Zylinders als elastisches Glied ist es möglich, eine Wegmessung und/oder eine Endlagensignalisierung einzubauen, wie in Figur 5 gezeigt und mit der Bezugszahl 16 versehen.

Massive Dichtringe 2' erfordern bei Verschleiß ein regelmäßiges Nachstellen. Die Wartungsintervalle für dieses wichtige Bauelement können deutlich verlängert werden, wenn pneumatisch oder hydraulisch expandierbare Hohldichtungen 13, wie in Figur 5 gezeigt, zum Einsatz kommen. Die Zuleitung des Druckmediums kann über eine in der Mitte der Drehachse angeordnete Leitung 14 mit Drehverbindung erfolgen.

Wenn der normalerweise fliegend gelagerte, aber nicht angetriebene Deckel in die rotierende Entleeröffnung eintritt, entsteht beim ersten Kontakt bis zur völligen Mitnahme des Verschlußdeckels ein Schlupf, der auf Dauer zu Verschleiß am Dichtring führt. Dieser Nachteil kann dadurch behoben werden, daß an der Lagerung des Deckels ein Drehantrieb 16 angebaut wird. Solch ein Drehantrieb, der beispielsweise mit Hilfe eines Hydraulikmotors verwirklicht werden kann, ist in Figur 6 gezeigt. Die Drehzahl des Deckels wird dabei so eingestellt, daß seine äußere Umfangsgeschwindigkeit vorzugsweise der inneren Umfangsgeschwindigkeit der Entleerungsöffnung entspricht. Auf diese Weise kann der Deckel ohne jeglichen Schlupf in die Öffnung eingeführt werden.

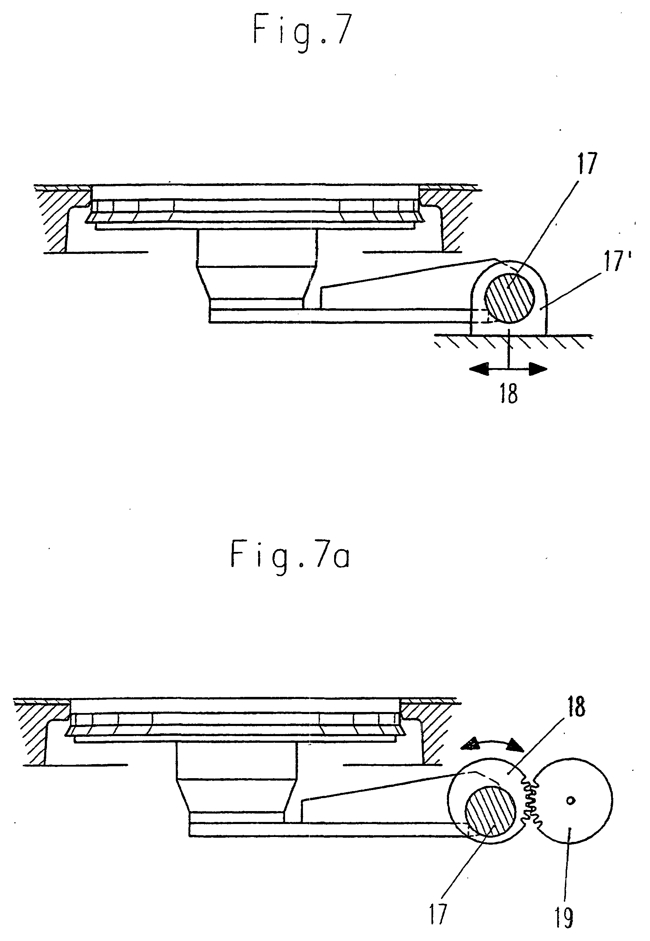

Die Steuerung der Bewegungskurve des Verschlußdeckels kann alternativ oder in Kombination auch durch eine Lageveränderung des Drehpunktes der Schwenkwelle erfolgen. Dies kann, wie in den Figuren 7 und 7a angedeutet, durch eine Linearverschiebung 18 des Wellenlagers 17' oder durch Anordnung des Lagers in einem Exzenter 18, der mit einem Drehantrieb 19 verbunden ist, erreicht werden.

Die Wartungsintervalle der Verschließvorrichtung können ebenso auch dadurch deutlich verlängert werden, daß ein Abstreifer 20 vorgesehen ist, der regelmäßig in Abhängigkeit von dem Antrieb der Verschließvorrichtung bzw. der Position des Verschlußdeckels, zur Abreinigung des inneren Randes der Entleeröffnung eingefahren wird.

Bedingt durch den erfindungsgemäßen größeren Federweg bzw. Elongationsweg des elastischen Elements kann die Außenkante des Verschlußdeckels in der geöffneten Stellung mit eiiner Reinigungseinrichtung 21, wie in Figur 10 gezeigt, in Verbindung gebracht werden, indem der für die Bewegungsregelung eingesetzte Antrieb zum Kippen des Deckels gegen die Reinigungseinrichtung benutzt wird.

Die größere Beweglichkeit der Lagerung des Verschlußdeckels kann auch besonders vorteilhaft zum Anbringen einer optischen Überwachungseinrichtung, z.B. einer Kamera oder einer Linse eines Endoskops, benutzt werden. Durch die erreichte erweiterte Beweglichkeit der Lagerung kann die Linse der Überwachungsvorrichtung über eine gesteuerte Bewegung einen Großteil des Verschlusses und ebenso die den Verschluß umgebenden Maschinenteile erfassen.

## Patentansprüche

1. Vorrichtung zum Verschließen einer im Boden eines Behälters, vorzugsweise eines Drehbehälters einer Aufbereitungsmaschine, angeordneten Entleeröffnung (1) mit einem an einer Schwenkwelle (4) über einem Tragarm (3) angeordneten Verschlußdeckel (2), der mit dem Tragarm (3) derart verbunden ist, daß der Verschlußdeckel (2) gegenüber dem Tragarm (3) um zumindest eine Kippachse (6) bewegbar ist, wobei ein Rückstellelement (7) mit dem Tragarm verbunden ist und zur Regelung bzw. Steuerung der Stellung des Verschlußdeckels (2) in Bezug auf die Entleeröffnung (1) vorgesehen ist, so daß die Hubbewegung des Dekkels (2) bei Eintritt in die Entleeröffnung (1) im wesentlichen translatorisch und im wesentlichen parallel zur Mittelachse (8) des Verschlußdeckels erfolgen kann **dadurch gekennzeichnet, daß** das Rückstellelement mindestens ein im wesentlichen zylindrisches Element aufweist, wobei die Wirkachse des mindestens einen zylindrischen Elements des Rückstellelements außerhalb der Ebene liegt, die von der Kippachse und einer Verbindungslinie zwischen Kippachse und Mittelpunkt des Verschlußdeckels aufgespannt wird und wobei die Wirkachse des mindestens einen Elements des Rückstellelements gegenüber der Ebene L, die von der Kippachse und einer Verbindungslinie zwischen Kippachse und Mittelpunkt des Verschlußdeckels aufgespannt wird, unter einem Winkel von mindestens 10° geneigt ist.

2. Vorrichtung nach Anspruch 1, **dadurch gekennzeichnet, daß** das Rückstellelement (7) aus einer oder mehreren Federn (7, 7') besteht und die Federn (7, 7') vorzugsweise aus einer Kombination von Druck- und Zugfedern bestehen.

3. Vorrichtung nach Anspruch 1 oder 2, **dadurch gekennzeichnet, daß** das Rückstellelement (7) ein pneumatischer oder hydraulischer Zylinder (10) ist.

4. Vorrichtung nach einem der Ansprüche 1 bis 3, **dadurch gekennzeichnet, daß** die Rückstellkraft des Rückstellelements (7) einstellbar und /oder steuerbar ist.

5. Vorrichtung nach einem der Ansprüche 1 bis 4, **dadurch gekennzeichnet, daß** die Einrichtung (16) zur Erfassung des Kippwinkels eine Einrichtung (16) zum Erfassen der Elongation des Rückstellelements (7) aufweist.

6. Vorrichtung nach einem der Ansprüche 1 bis 5, **dadurch gekennzeichnet, daß** die Kippachse (6) im Abstand zur Mittelachse (8) des Verschlußdeckels (2) verläuft.

7. Vorrichtung nach einem der Ansprüche 1 bis 6, **dadurch gekennzeichnet, daß** der Verschlußdeckel (2) einen Dichtring (13) aufweist, der aufblas- bzw. aufpumpbar ist.

8. Vorrichtung nach einem der Ansprüche 1 bis 7, **dadurch gekennzeichnet, daß** ein Drehwächter zur Erfassung der Rotationsgeschwindigkeit des Verschlußdeckels (2) vorgesehen ist.

9. Vorrichtung nach einem der Ansprüche 1 bis 8, **dadurch gekennzeichnet, daß** der Verschlußdeckel (2) einen Drehantrieb (161) aufweist.

10. Vorrichtung nach einem der Ansprüche 1 bis 9, **dadurch gekennzeichnet, daß** die Schwenkwelle (4, 17) des Tragarms (3) verschiebbar ist.

11. Vorrichtung nach Anspruch 10, **dadurch gekennzeichnet, daß** die Verstellung der Schwenkwelle (4, 17) des Tragarms (3) durch eine verstellbare exzentrische Lagerung (18) der Schwenkwelle (4) erfolgt.

12. Vorrichtung nach Anspruch 11, **dadurch gekennzeichnet, daß** eine Antriebsvorrichtung (19) für die Verstellung der exzentrischen Lagerung (18) der Schwenkwelle (4, 17) vorgesehen ist.

13. Vorrichtung nach einem der Ansprüche 1 bis 12, **dadurch gekennzeichnet, daß** eine optische Überwachungseinrichtung vorgesehen ist, die vorzugsweise auf einem Verlängerungarm des Lagergehäuses des Verschlußdeckels (2) angebracht ist.

14. Vorrichtung nach einem der Ansprüche 1 bis 13, **dadurch gekennzeichnet, daß** eine Reinigungsvorrichtung (20, 21) zur Reinigung der Innenseite der Entleeröffnung (1) und/oder der Außenseite des Verschlußdeckels (2) vorgesehen ist.

15. Vorrichtung nach einem der Ansprüche 1 bis 14, **dadurch gekennzeichnet, daß** ein Steuerelement bzw. Regelelement vorgesehen ist, daß den Kippwinkel zwischen Tragarm (3) und Verschlußdeckel (2) steuern oder regeln kann.

16. Vorrichtung nach einem der Ansprüche 1 bis 15, **dadurch gekennzeichnet, daß** der Winkel zwischen Kippachse und der Ebene L mindestens 20°, vorzugsweise mindestens 30° beträgt.

17. Verfahren zum Betrieb einer Verschließvorrichtung für das Verschließen einer im Boden eines Behälters angeordneten Entleeröffnung (1) mit einem an einer Schwenkwelle (4) über einem Tragarm (3) angeordneten Verschlußdeckel (2), der derart mit dem Tragarm (3) verbunden ist, daß der Verschlußdeckel (2) gegenüber dem Tragarm (3) um zumindest eine Kippachse (6) bewegbar ist, wobei die Stellung des Verschlußdeckels (2) in Bezug auf die Entleeröffnung (1) gesteuert bzw. geregelt wird, so daß die Hubbewegung des Deckels (2) bei Eintritt in die Entleeröffnung (1) im wesentlichen translatorisch und im wesentlichen parallel zur Mittelachse (8) des Verschlußdeckels (2) erfolgt, **dadurch gekennzeichnet, daß** die Regelung bzw. Steuerung mit Hilfe eines mit dem Tragarm verbundenen Rückstellelements (7), das mindestens ein im wesentlichen zylindrisches Element aufweist, dessen Wirkachse außerhalb der Ebene liegt, die von der Kippachse und einer Verbindungslinie zwischen Kippachse und Mittelpunkt des Verschlußdeckels aufgespannt wird, wobei die Wirkachse des mindestens einen Elements des Rückstellelements gegenüber der Ebene, die von der Kippachse und einer Verbindungslinie zwischen Kippachse und Mittelpunkt des Verschlußdeckels aufgespannt wird, unter einem Winkel von mindestens 10°, vorzugsweise mindestens 20°, besonders bevorzugt etwa 30°, geneigt ist, erfolgt.

18. Verfahren nach Anspruch 17, **dadurch gekennzeichnet, daß** die Regelung über die Veränderung des Kippwinkels zwischen Tragarm (3) und Verschlußdeckel (2) und/oder über die Verstellung der Schwenkwelle (4, 17) erfolgt.

19. Verfahren nach Anspruch 17 oder 18, **dadurch gekennzeichnet, daß** in einer Schließposition des Verschlußdeckels (2) ein den Verschlußdeckel (2) oder die Entleeröffnung (1) umgebender aufblas- bzw. aufpumpbarer Dichtring (13) expandiert wird.

20. Verfahren nach einem der Ansprüche 17 bis 19, **dadurch gekennzeichnet, daß** der Kippwinkel und/oder die Lage der Schwenkwelle (4) erfaßt werden und die Regelung der Ver schlußdeckelstellung in Abhängigkeit von den erfaßten Werten erfolgt.

21. Verfahren nach einem der Ansprüche 17 bis 20, **dadurch gekennzeichnet, daß** der Ver schlußdeckel (2) bereits während des Schließvorgangs in eine Drehbewegung versetzt wird, so daß die Rotationsgeschwindigkeit des Verschlußdeckels (2) in etwa mit der Rotationsgeschwindigkeit des Behälters übereinstimmt.

22. Verfahren nach einem der Ansprüche 17 bis 21, **dadurch gekennzeichnet, daß** eine Reinigungseinrichtung (20) für die Reinigung der Entleeröffnung (1) in Abhängigkeit von der Lage des Tragarms (3) gesteuert wird.

23. Verfahren nach einem der Ansprüche 17 bis 22, **dadurch gekennzeichnet, daß** ein Prüfmodus zur Prüfung des Zustandes des Dichtrings vorgesehen ist, der dieSchritte aufweist: Rotieren des Drehbehälters,
Verschließen des Drehbehälters mit dem nicht rotierenden Verschlußdeckel (2),
Erfassen der Rotationsgeschwindigkeit des Verschlußdeckels (2) in Abhängigkeit von der Lage des Deckels (2) während des Verschließens des Drehbehälters und
Ermittlung des Betriebszustandes des Dichtrings in Abhängigkeit von der erfaßten Rotationsgeschwindigkeit.

24. Verfahren nach einem der Ansprüche 17 bis 23, **dadurch gekennzeichnet, daß** die Stellung des Verschlußdeckels (2) optisch erfaßt wird und die Stellung des Verschlußdeckels (2) in Abhängigkeit von der optischen Erfassung geregelt wird.

25. Verfahren nach einem der Ansprüche 17 bis 24, **dadurch gekennzeichnet, daß** eine optische Bilderfassungseinrichtung, die auf der beweglichen Verschließvorrichtung montiert ist, zur Überwachung der die Verschlußvorrichtung umgebenden Maschinenteile verwendet wird.

26. Verfahren nach einem der Ansprüche 17 bis 25, **dadurch gekennzeichnet, daß** der Verschlußdeckel (2) in der geöffneten Stellung in bzw. an eine Reinigungseinrichtung (21) gedrückt wird.

## Claims

1. Device for sealing a discharge aperture (1) arranged in the base of a container, preferably a rotary container of a preparation machine, with a sealing cover (2) arranged on a pivoting arm (4) via a carrying arm (3), which cover is connected to the carrying arm (3) such that the sealing cover (2) is moveable about at least one tipping axis (8) with respect to the carrying arm (3), whereas a return element (7) is connected with the carrying arm (3) and is provided for regulating or respectively controlling the position of the sealing cover (2) in relation to the discharge aperture (1), so that the lifting movement of the cover (2) is substantially translatory when entering into the discharge aperture (1), and can take place substantially parallel to the central axis (8) of the sealing cover, **characterised in that** the return element has at least one essentially cylindrical element, whereas the effective axis of the at least one cylindrical element lies outside the plane spanned by the tipping axis and a connecting line between the tipping axis and the centre point of the sealing cover and whereas the effective axis of the at least one element of the return element is inclined at an angle of not less than 10° with respect to the plane L spanned by the tipping axis and a connecting line between the tipping axis and the centre point of the sealing cover.

2. Device according to claim 1, **characterised in that** the return element (7) is composed of one or more springs (7, 7') and the springs (7, 7') are preferably composed of a combination of compression and tension springs.

3. Device according to one of claims 1 or 2, **characterised in that** the return element (7) is a pneumatic or hydraulic cylinder (10).

4. Device according to one of claims 1 to 3, **characterised in that** the return force of the return element (7) is adjustable and/or controllable.

5. Device according to one of claims 1 to 4, **characterised in that** the means (16) for determining the tipping angle is provided with a means (16) for determining the elongation of the return element (7).

6. Device according to one of claims 1 to 5, **characterised in that** the tipping axis (6) is at a distance from the central axis (8) of the sealing cover (2).

7. Device according to one of claims 1 to 6, **characterised in that** the sealing cover (2) is provided with a sealing ring (13) which can be inflated or pumped up.

8. Device according to one of claims 1 to 7, **characterised in that** a rotation monitor is provided for determining the speed of rotation of the sealing cover (2).

9. Device according to one of claims 1 to 8, **characterised in that** the sealing cover (2) is provided with a rotary drive (161).

10. Device according to one of claims 1 to 11, **characterised in that** the pivoting shaft (4, 17) of the carrying arm (3) is displaceable.

11. Device according to claim 12, **characterised in that** the adjustment of the pivoting shaft (4, 17) of the carrying arm (3) is done by an adjustable eccentric bearing (18) of the pivoting shaft (4).

12. Device according to claim 11, **characterised in that** a drive device (19) for the adjustment of the eccentric bearing (18) of the pivoting shaft (4, 17) is provided.

13. Device according to one of claims 1 to 12, **characterised in that** an optical monitoring means is provided, which is preferably attached to an extension arm of the bearing housing of the sealing cover (2).

14. Device according to one of claims 1 to 13, **characterised in that** a cleaning device (20, 21) for cleaning the inside of the discharge aperture (1) and/or the outside of the sealing cover (2) is provided.

15. Device according to one of claims 1 to 14, **characterised in that** a control element or respectively a regulating element is provided which can control or regulate the tipping angle between the carrying arm (3) and the sealing cover (2).

16. Device according to one of claims 1 to 15, **characterised in that** the angle between the tipping axis and the plane L is not less than 20° and preferably not less than 30°.

17. Method for operating a sealing device for sealing a discharge aperture (1 ) arranged in the base of a container, with a sealing cover (2) arranged via a carrying arm (3) on a pivoting shaft (4), which cover is connected with the carrying arm (3) such that the sealing cover (2) is moveable about at least one tipping axis (6) with respect to the carrying arm (3), whereas the position of the sealing cover (2) in relation to the discharge aperture (1) is controlled or respectively regulated so that the lifting movement of the cover (2) when entering the discharge aperture (1) is substantially translatory and substantially parallel to the central axis (8) of the sealing cover (2), **characterised in that** the controlling or respectively regulation is done with the aid of a return element (7) comprising at least one essentially cylindrical element, whereas the effective axis of the effective axis of the at least one cylindrical element lies outside the plane spanned by the tipping axis and a connecting line between the tipping axis and the centre point of the sealing cover and whereas the effective axis of the at least one element of the return element is inclined at an angle of not less than 10°, preferably of not less than 20° and more preferably of not less than 30° with respect to the plane L spanned by the tipping axis and a connecting line between the tipping axis and the centre point of the sealing cover.

18. Method according to claim 17, **characterised in that** the regulation is done by altering the tipping angle between the carrying arm (3) and sealing cover (2) and/or by adjusting the pivoting shaft (4, 17).

19. Method according to claim 17 or 18, **characterised in that** in a closed position of the sealing cover (2), a sealing ring (13) which is inflatable or can be pumped up, surrounding the sealing cover (2) or the discharge aperture (1), is expanded.

20. Method according to one of claims 17 to 19, **characterised in that** the tipping angle and/or the position of the pivoting shaft (4) is determined and the regulating of the sealing cover position takes place dependent upon the values determined.

21. Method according to one of claims 17 to 20, **characterised in that** the sealing cover (2) is put into a rotary motion already during the closing procedure, so that the speed of rotation of the sealing cover (2) approximately corresponds to the speed of rotation of the container.

22. Method according to one of claims 17 to 21, **characterised in that** a cleaning means (20) for cleaning the discharge aperture (1) is controlled dependent upon the position of the carrying arm (3).

23. Method according to one of claims 17 to 22, **characterised in that** a testing mode for testing the state of the sealing ring is provided, which has the following steps:
- rotating the rotary container,
- sealing the rotary container with the non-rotating sealing cover (2),
- determining the speed of rotation of the sealing cover (2) dependent upon the position of the cover (2) during the sealing of the rotary container, and
- determining the operating condition of the sealing ring dependent upon the speed of rotation determined.

24. Method according to one of claims 17 to 23, **characterised in that** the position of the sealing cover (2) is determined optically, and the position of the sealing cover (2) is regulated dependent upon the optical determination.

25. Method according to one of claims 17 to 24, **characterised in that** an optical image capture means, which is mounted on the moveable sealing cover, is used for monitoring the machine parts surrounding the sealing cover.

26. Method according to one of claims 17 to 25, **characterised in that** in the open position, the sealing cover (2) is pressed into or respectively onto a cleaning means (21).

## Revendications

1. Dispositif de fermeture d'une ouverture de vidange (1), ménagée au fond d'un récipient, avantageusement d'un récipient rotatif d'une machine de traitement, au moyen d'un couvercle de fermeture (2) qui est monté sur un arbre oscillant (4) par un bras de support (3) et qui est relié au bras de support (3) de telle sorte que le couvercle de fermeture (2) est mobile par rapport au bras de support (3) autour d'au moins un axe de basculement (6), un élément de rappel (7) étant relié au bras de support et étant destiné à réguler respectivement commander la position du couvercle de fermeture (2) par rapport à l'ouverture de vidange (1) de sorte que le mouvement de levage du couvercle (2) lors de l'entrée dans l'ouverture de vidange (1) peut être effectué sensiblement en translation et sensiblement parallèlement à un axe médian (8) du couvercle de fermeture, **caractérisé en ce que** l'élément de rappel comporte au moins un élément sensiblement cylindrique, l'axe actif de l'élément cylindrique au moins de l'élément de rappel se trouvant à l'extérieur du plan qui passe par l'axe de basculement et une ligne de liaison entre l'axe de basculement et le point médian du couvercle de fermeture et l'axe actif de l'élément au moins de l'élément de rappel étant incliné d'un angle d'au moins 10° par rapport au plan L qui passe par l'axe de basculement et une ligne de liaison entre l'axe de basculement et le point médian du couvercle de fermeture.

2. Dispositif selon la revendication 1, **caractérisé en ce que** l'élément de rappel (7) est constitué d'un ou plusieurs ressorts (7,7') et **en ce que** les ressorts (7, 7') sont constitués avantageusement d'une combinaison de ressorts de compression et de traction.

3. Dispositif selon la revendication 1 ou 2, **caractérisé en ce que** l'élément de rappel (7) est un vérin pneumatique ou hydraulique (10).

4. Dispositif selon l'une des revendications 1 à 3, **caractérisé en ce que** la force de rappel de l'élément de rappel (7) peut être réglée et/ou commandée.

5. Dispositif selon l'une des revendications 1 à 4, **caractérisé en ce que** le dispositif (16) de détection de l'angle de basculement comporte un dispositif (16) destiné à détecter l'élongation de l'élément de rappel (7).

6. Dispositif selon l'une des revendications 1 à 5, **caractérisé en ce que** l'axe de basculement (6) s'étend à distance de l'axe médian (8) du couvercle de fermeture (2).

7. Dispositif selon l'une des revendications 1 à 6, **caractérisé en ce que** le couvercle de fermeture (2) comporte une bague d'étanchéité (13) qui peut être expansible respectivement gonflable.

8. Dispositif selon l'une des revendications 1 à 7, **caractérisé en ce qu'**il est prévu un contrôleur de rotation destiné à déterminer la vitesse de rotation du couvercle de fermeture (2).

9. Dispositif selon l'une des revendications 1 à 8, **caractérisé en ce que** le couvercle de fermeture (2) comporte un entraînement en rotation (161).

10. Dispositif selon l'une des revendications 1 à 9, **caractérisé en ce que** l'arbre oscillant (4, 17) du bras de support (3) est mobile en translation.

11. Dispositif selon la revendication 10, **caractérisé en ce que** le réglage de l'arbre oscillant (4, 17) du bras de support (3) est effectué par un positionnement excentrique réglable (18) de l'arbre oscillant (4).

12. Dispositif selon la revendication 11, **caractérisé en ce qu'**un dispositif d'entraînement (19) est prévu pour régler le positionnement excentrique (18) de l'arbre oscillant (4, 17).

13. Dispositif selon l'une des revendications 1 à 12, **caractérisé en ce qu'**il est prévu un dispositif de surveillance optique qui est monté avantageusement sur un bras de prolongement du boîtier de paliers du couvercle de fermeture (2).

14. Dispositif selon l'une des revendications 1 à 13, **caractérisé en ce qu'**il est prévu un dispositif de nettoyage (20, 21) destiné à nettoyer le côté intérieur de l'ouverture de vidange (1) et/ou le côté extérieur du couvercle de fermeture (2).

15. Dispositif selon l'une des revendications 1 à 14, **caractérisé en ce qu'**il est prévu un élément de commande respectivement un élément de régulation qui peut commander ou réguler l'angle de basculement entre le bras de support (3) et le couvercle de fermeture (2).

16. Dispositif selon l'une des revendications 1 à 15, **caractérisé en ce que** l'angle entre l'axe de basculement et le plan L est d'au moins 20°, avantageusement d'au moins 30°.

17. Procédé de commande d'un dispositif de fermeture d'une ouverture de vidange (1), ménagée au fond d'un récipient au moyen d'un couvercle de fermeture (2) qui est monté sur un arbre oscillant (4) par un bras de support (3) et qui est relié au bras de support (3) de telle sorte que le couvercle de fermeture (2) est mobile par rapport au bras de support (3) autour d'au moins un axe de basculement (6), la position du couvercle de fermeture (2) par rapport à l'ouverture de vidange (1) étant commandée respectivement régulée de sorte que le mouvement de levage du couvercle (2) lors de l'entrée dans l'ouverture de vidange (1) peut être effectué sensiblement en translation et sensiblement parallèlement à l'axe médian (8) du couvercle de fermeture (2), **caractérisé en ce que** la régulation respectivement la commande est effectuée à l'aide d'un élément de rappel (7) qui est relié au bras de support et qui comporte au moins un élément sensiblement cylindrique, dont l'axe actif se trouve à l'extérieur du plan qui passe par l'axe de basculement et une ligne de liaison entre l'axe de basculement et le point médian du couvercle de fermeture et l'axe actif de l'élément de rappel au moins étant incliné d'un angle d'au moins 10°, avantageusement d'au moins 20°, en particulier de préférence de par exemple 30°, par rapport au plan qui passe par l'axe de basculement et une ligne de liaison entre l'axe de basculement et le point médian du couvercle de fermeture.

18. Procédé sous la revendication 17, **caractérisé en ce que** la régulation est effectuée en modifiant l'angle de pivotement entre le bras de support (3) et le couvercle de fermeture (2) et/ou en déplaçant l'arbre oscillant (4, 17).

19. Procédé selon la revendication 17 ou 18, **caractérisé en ce qu'**une bague d'étanchéité (13) expansible respectivement gonflable, entourant le couvercle de fermeture (2) ou l'ouverture de vidange (1), est expansée dans une position de fermeture du couvercle de fermeture (2).

20. Procédé selon l'une des revendications 17 à 19, **caractérisé en ce que** l'angle de basculement et/ou la position de l'arbre oscillant (4) sont détectés et la régulation de la position du couvercle de fermeture est effectuée en fonction des valeurs détectées.

21. Procédé selon l'une des revendications 17 à 20, **caractérisé en ce que** le couvercle de fermeture (2) est déplacé dans une position de rotation dès le processus de fermeture de sorte que la vitesse de rotation du couvercle de fermeture (2) concorde sensiblement avec la vitesse de rotation du récipient.

22. Procédé selon l'une des revendications 17 à 21, **caractérisé en ce qu'**un dispositif de nettoyage (20) destiné à nettoyer l'ouverture de vidange (1 ) est commandé en fonction de la position du bras de support (3).

23. Procédé selon l'une des revendications 17 à 22, **caractérisé en ce qu'**il est prévu un mode de vérification qui est destiné à vérifier l'état de la bague d'étanchéité et qui comporte les étapes consistant à :
faire tourner le récipient rotatif,
fermer le récipient rotatif avec le couvercle de fermeture (2) fixe en rotation,
détecter la vitesse de rotation du couvercle de fermeture (2) en fonction de la position du couvercle (2) pendant la fermeture du récipient rotatif et
déterminer l'état de fonctionnement de la bague d'étanchéité en fonction de la vitesse de rotation détectée.

24. Procédé selon l'une des revendications 17 à 23, **caractérisé en ce que** la position du couvercle de fermeture (2) est détectée par des moyens optiques et la position du couvercle de fermeture (2) est régulée en fonction de la détection optique.

25. Procédé selon l'une des revendications 17 à 23, **caractérisé en ce qu'**un dispositif optique de détection d'images, qui est monté sur le dispositif de fermeture mobile, est utilisé pour surveiller les pièces de machine entourant le dispositif de fermeture.

26. Procédé selon l'une des revendications 17 à 25, **caractérisé en ce que** le couvercle de fermeture (2) dans la position ouverte est pressé dans un dispositif de nettoyage (21) ou sur celui-ci.
